# EUROPEAN PATENT SPECIFICATION

(11) **EP 4 072 314 B1**
(45) Date of publication and mention of the grant of the patent: **20.09.2023**
(21) Application number: 20817415.1
(22) Date of filing: 09.12.2020
(51) Int. Cl.: A23L 7/157, A23C 19/09, A23L 13/00, A23L 13/50, A23L 13/60, A23L 17/00, A23L 19/00, A23P 20/10

(54) **OVENABLE CRUMB-COATED SNACK**
OFENTAUGLICHER KRUMENBEDECKTER SNACK
COLLATION À PANURE POUVANT ÊTRE CUITE AU FOUR

(30) Priority: 10.12.2019 EP 19214850
(43) Date of publication of application: 19.10.2022
(73) Proprietor: Crisp Sensation Technology B.V., 5301 LW Zaltbommel (NL)
(72) Inventor: VAN DONKELAAR, Laura Henrietta Gerardina, 1231 PB Oud-Loosdrecht (NL); VAN GIJSSEL, Jantje, 1231 PB Oud-Loosdrecht (NL)
(74) Representative: Nederlandsch Octrooibureau
(86) International application number: PCT/EP2020/085240
(87) International publication number: WO 2021/116159

(56) References cited:
- US-A- 3 852 501
- US-A- 4 208 442
- US-A- 4 260 637
- US-A1- 2016 165 930
- US-B1- 6 562 384

## Description

### TECHNICAL FIELD OF THE INVENTION

The present invention relates to an ovenable pre-baked crumb-coated snack comprising:
- a filling;
- a barrier layer surrounding the filling, said barrier layer containing:
   - oligosaccharides having a degree of polymerisation (DP) in the range of 4-20;
   - protein; and
   - optionally starch;
   wherein the combination of the oligosaccharides, protein and starch constitutes at least 50 wt.% of the dry matter of the barrier layer; and
- a layer of crumb particles deposited onto the surrounding barrier layer.

The ovenable snack according to the present invention can be heated in an oven to prepare a ready-to-eat snack without the occurrence of cracks or so-called `blow outs', i.e. leakage of filling through the barrier layer and crumb layer as a result of pressure build-up within the filling.

The invention further relates to a process of manufacturing an ovenable crumb-coated snack and to a method of preparing a ready-to-eat snack, said method comprising heating the ovenable snack of the present invention in an oven.

### BACKGROUND OF THE INVENTION

Fried battered and breaded (crumb-coated) snacks with a filling of fish, seafood, poultry, red meat, vegetables, ragout, cheese, etc. are popular for their crispy texture and golden brown appearance. Such crumb-coated snacks generally comprise a food substrate to which a variety of combinations of coating materials is applied. The coating materials typically include predust, adhesion batters, and breading crumbs.

Industrially produced crumb-coated snacks that only need to be fried to produce a ready-to-eat snack are commercially available. These fryable snacks typically are prepared by coating a filling with a layer of batter; applying crumbs onto the batter coated filling; and freezing the crumb-coated portion. During frying, the filling and the batter become fully cooked and the snack develops crispy texture and golden brown appearance. The crispy texture of the fried snack is provided by the combination of batter and crumb. During frying, the starch in the batter gelatinizes and water is removed from both the batter and crumb particles. Together, these changes contribute to the formation of a crunchy outer layer that is characteristic of fried crumb-coated snacks.

However, if the aforementioned fryable snacks are heated in an oven instead of a deep fryer, the oven heated product lacks the desirable crispy texture. This is because the heat transfer rate during baking is much lower than during deep frying.

Crumb-coated snacks that are meant to be prepared in an oven instead of fryer, so called 'ovenable' snacks, are known in the art.

US 4,943,438 describes a method of preparing food products which produces in said food products, when reheated by microwave or conventional baking, a flavour, texture, and appearance produced by frying said food products, said method comprising the steps of:
(a) coating an initial food product with a batter;
(b) breading the coated product with a breading crumb mixture;
(c) baking the breaded product in a humidified oven;
(d) applying edible oil in atomized form to the surface of the baked product; and then
(e) exposing the baked product surface to high temperature heating.

The preferred batter contains water, wheat flour and carboxymethyl cellulose.

US 4,460,837 describes a food coating composition for imparting a crisp, golden-brown surface to foodstuff cooked in a microwave appliance comprising:
- 40-90 wt.% of a blend of bread crumbs and oil, wherein the amount of bread crumbs in the blend ranges from 66 to 76% by weight of the blend and the amount of oil in the blend ranges from 24 to 34% by weight of the blend;
- 5-20 wt.% of dextrin having a dextrose equivalent (DE) in the range of 5 to 20;
- 5-20 wt.% of pre-gelatinized starch; and
- 2-20 wt.% of soy protein concentrate,
said composition having a total oil content ranging from 15-24% by weight.

US 6,562,384 describes batter mixes comprising 35-75% adhesion component, 2-11% viscosity component, and 5-50% crispness component. Tapioca dextrin, maltodextrin, adhesion starch (e.g., BATTER BIND from National Starch & Chemical), and corn syrup solids, used alone or in combination, are said to be particularly suitable for use as the adhesion component.

WO 96/28051 describes a batter composition comprising:
- 2 to 10% oligosaccharides;
- 3 to 12% soluble protein;
- 10 to 60% vegetable oil;
- 0 to 5% emulsifier;
- to 100% water.

This batter can be used to enrobe a food core, followed by the application of crumb. The crumb coated product can be frozen without pre-frying.

CN 101263913 describes a batter composition that can be used in the preparation of microwaveable frozen pre-fried crumb-coated food products. The dry components of the batter comprises 70-100 parts by weight flour; 2.5-7.5 parts by weight soy protein; 0.8-2.3 parts by weight of soybean phospholipid; 2.3-6.8 parts by weight of maltodextrin; 0.1-0.5 parts by weight of guar gum.

US 4,260,637 describes a dry, self-sticking bread crumb composition comprising:
- bread crumbs having a particle size wherein at least 50% by weight of the crumbs are retained on a 20 mesh U.S. Standard Screen after passing through a 65 mesh U.S. Standard Screen and wherein not more than 10% by weight of the crumbs are retained on a 5 mesh U.S. Standard Screen; and,
- an amount of an adhesive effective to bind the crumbs to a moistened comestible, said adhesive containing a protein, said protein being present at a level of at least about 1% by weight of the crumbs, said adhesive having been applied to and adhering to the surface of said crumbs.

US 2016/165930 describes a stabilizer composition comprising, calculated by weight of dry matter:

| | |
|---|---|
| cellulose gum | 5-25 wt.% |
| modified starch | 10-50 wt.% |
| maltodextrin | 10-55 wt.% |
| polydextrose | 0-45 wt.% |
| protein | 0-20 wt.% |
| hydrocolloid | 1-10 wt.% |
| other ingredients | 0-30 wt.% |

US 3,852,501 describes a process for imparting the taste, texture, and appearance of fat frying to foodstuffs which are baked, comprising,
- moistening the surface of a foodstuff,
- coating the moistened foodstuff with a dry, edible mix consisting essentially of 10-50% of an edible powdered shortening, 8-35% farinaceous material, 15-35% of a corn starch hydrolyzate, and 5-18% of a modified food starch, at least some of which food starch is ungelatinized, and
- baking said coated foodstuff until cooked.

### SUMMARY OF THE INVENTION

The inventors have developed a pre-baked crumb-coated snack that can be heated in an oven to prepare a ready-to-eat snack without the occurrence of blow outs and cracks. The inventors have discovered that blow outs and the occurrence of cracks during oven baking of pre-baked crumb-coated snack can be minimized effectively by employing a special coating that contains at least 15 wt.% of oligosaccharides. More particularly, the present invention relates to an ovenable pre-baked crumb-coated snack comprising:
(a) a filling having a water content of 30-90 wt.%;
(b) a barrier layer surrounding the filling, said barrier layer containing
   - 15-75 wt.%, calculated by weight of dry matter, of oligosaccharides having a degree of polymerisation (DP) in the range of 4-20;
   - 2-45 wt.%, calculated by weight of dry matter, of protein;
   - 0-50 wt.%, calculated by weight of dry matter, of starch;
   wherein the combination of the oligosaccharides, protein and starch constitutes at least 50 wt.% of the dry matter of the barrier layer; and
(c) a layer of crumb particles deposited onto the surrounding barrier layer.

During the pre-baking of the ovenable snack, the combination of oligosaccharides and protein in the barrier layer contributes to the rapid formation of a cohesive dehydrated barrier layer that effectively prevents against blow outs and formation of cracks. After pre-baking, the dehydrated barrier layer acts as an effective moisture barrier between filling and crumb during frozen or chilled storage of the ovenable snack, thereby allowing the pre-baked snack to be baked to produce ready-to-eat snack with a crispy outer coating. Finally, during bake-off of the ovenable snack, the dehydrated barrier layer once more effectively prevents against the occurrence of blow outs and cracks.

The invention also relates to a process of manufacturing an ovenable pre-baked crumb-coated snack, said process comprising:
(a) providing a portion of a filling composition having a water content of at least 30 wt.%;
(b) coating the portion of filling composition with a layer of coating composition to produce a coated portion, said coating composition having a water content of at least 45 wt.% and containing:
   - 15-75 wt.%, calculated by weight of dry matter, of oligosaccharides having a degree of polymerisation (DP) in the range of 4-20;
   - 2-45 wt.%, calculated by weight of dry matter, of protein;
   - 0-50 wt.%, calculated by weight of dry matter, of starch;
   wherein the combination of the oligosaccharides, protein and starch constitutes at least 50 wt.% of the dry matter of the coating composition;
(c) applying crumb particles onto the coated portion to produce a crumb-coated portion;
(d) pre-baking the crumb-coated portion to produce a pre-baked portion; and
(e) packaging the pre-baked portion.

The invention also provides a method of preparing a ready-to-eat snack, said method comprising heating the ovenable snack of the present invention in an oven to a core temperature of at least 60°C.

### DETAILED DESCRIPTION OF THE INVENTION

Accordingly, a first aspect of the invention relates to an ovenable crumb-coated snack comprising:
(a) a filling having a water content of 30-90 wt.%;
(b) a barrier layer surrounding the filling, said barrier layer containing
   - 15-75 wt.%, calculated by weight of dry matter, of oligosaccharides having a degree of polymerisation (DP) in the range of 4-20;
   - 2-45 wt.%, calculated by weight of dry matter, of protein;
   - 0-50 wt.%, calculated by weight of dry matter, of starch;
   wherein the combination of the oligosaccharides, protein and starch constitutes at least 50 wt.% of the dry matter of the barrier layer; and
(c) a layer of crumb particles deposited onto the surrounding barrier layer.

The words 'comprising' and 'containing' as used herein should not be interpreted restrictively as meaning 'consisting of'. In other words, besides the features listed after these words, non-listed features may be present.

The term "oligosaccharides" as used herein refers to saccharide polymers containing 4 to 20 monosaccharide residues, i.e. having a degree of polymerisation in the range of 4 to 20. Examples of oligosaccharides include oligofructose (e.g. hydrolysed starch), oligofructose (e.g. inulin) and oligogalactose.

The term "protein" as used herein refers to linear polymers of at least 100 amino acid residues that are bonded together by peptide bonds.

The term "heat setting protein" as used herein refers to a protein that is capable of forming a aqueous gel when the non-denatured protein is denatured by heating. Here, "non-denatured protein" refers to protein that still has the secondary structure which is present when that protein is in its native state.

The term "starch" as used herein refers to a polysaccharide consisting of amylose and/or amylopectin and containing at least 100 monosaccharide residues.

The term "oil" as used herein refers to lipids selected from triglycerides, diglycerides, monoglycerides, free fatty acids and phospholipids.

The term "baking" as used herein refers to cooking by exposure to dry heat, as opposed to e.g. boiling or frying. Besides oven heating, which may involve steam injection, the term "baking" also encompasses, for instance, contacting with superheated steam, exposure to hot air impingement and exposure to infrared radiation.

The term "dry matter" as used herein refers to the matter that remains after water and other volatile components have been removed by evaporation using a forced-air oven (3 hours at 105°C, or longer if not all moisture has been removed).

Whenever reference is made herein to the particle size distribution of a particulate material, the particle size (or diameter) distribution is determined using a set of sieves having different mesh sizes.

The ovenable snack of the present invention preferably has a weight of 8 to 150 grams, more preferably of 10 to 130 grams and most preferably of 15 to 120 grams.

Examples of ovenable snacks according to the present invention include chicken nuggets, cheese bites, fish fingers, croquettes and "bitterballen" (crumb coated ragout balls).

The ovenable snack of the present invention preferably is regularly shaped in that the volume of the snack equals at least 50% of the volume of the smallest enclosing sphere or ellipsoid that fully encompasses the snack.

According to a particularly preferred embodiment, the ovenable snack of the present invention has been pre-baked.

According to another preferred embodiment, the ovenable snack of the present invention is a frozen ovenable snack.

The ovenable snack preferably comprises 40-95 wt.% of filling, more preferably 42-92 wt.% of filling and most preferably 45-90 wt.% of filling.

The benefits of the present invention are particularly appreciated in case the filling contains at least 35 wt.% water. More preferably, the filling contains 40-85 wt.% water. Most preferably, the filling has a water content of 50-80 wt.%.

Preferably, the filling contains at least about 50 wt.%, more preferably at least about 60 wt.% and most preferably at least about 80 wt.% of edible ingredients selected from fish, meat, poultry, shellfish, shrimps, cheese, ragout, vegetables, fungi and combinations thereof.

The filling, especially if it is composed of chopped or comminuted pieces, is preferably impregnated with a stabiliser composition, for example by soaking, permeation or injection (for example vacuum pulse injection), prior to the forming into portions. Examples of suitable stabiliser compositions can be found in WO 97/03572.

During the pre-baking of the present crumb-coated snack, protein in the barrier layer is at least partly denatured and starch, if present, is at least partly gelatinised.

The barrier layer that surrounds the filling preferably contains, calculated by weight of dry matter, 18-70 wt.%, more preferably 20-65 wt.% and most preferably 22-60 wt.% of oligosaccharides having a DP in the range of 4-20.

According to another preferred embodiment, the barrier layer contains, calculated by weight of dry matter, at least 12 wt.%, more preferably at least 15 wt.% and most preferably at least 18 wt.% of oligosaccharides having a DP in the range of 4-10.

The oligosaccharides that are contained in the barrier layer of the ovenable snack are preferably selected from gluco-oligosaccharides, fructo-oligosaccharides, galacto-oligosaccharides and combinations thereof. Most preferably, the oligosaccharides are gluco-oligosaccharides.

Preferably, the barrier layer contains, calculated by weight of dry matter, at least 15 wt.%, more preferably at least 18 wt.% and most preferably at least 20 wt.% of gluco-oligosaccharides having a DP in the range of 4-20.

According to a particularly preferred embodiment, the barrier layer contains, calculated by weight of dry matter, at least 12 wt.%, more preferably at least 15 wt.% and most preferably at least 18 wt.% of gluco-oligosaccharides having a DP in the range of 4-10.

Preferably, the barrier layer contains, calculated by weight of dry matter, at least 2 wt.% of protein selected from soy protein, egg protein, whey protein, legume protein, gluten and combinations thereof.

In one advantageous embodiment of the invention the barrier layer contains, calculated by weight of dry matter, 10-45 wt.%, more preferably 12-40 wt.% of heat setting protein selected from soy protein, egg protein, legume protein and combinations thereof. Even more the barrier layer contains, calculated by weight of dry matter, 10-45 wt.%, more preferably 12-40 wt.% of heat setting protein selected from soy protein, pea protein, lupin protein and combinations thereof. Most preferably, the barrier layer contains, calculated by weight of dry matter, 10-45 wt.%, more preferably 12-40 wt.% of soy protein.

The combination of the heat setting protein and the oligosaccharides preferably constitutes at least 35 wt.% of the dry matter of the barrier layer, more preferably at least 45 wt.% of the dry matter of the barrier layer and most preferably at least 50 wt.% of the dry matter of the barrier layer. In accordance with this embodiment, starch preferably constitutes less than 30 wt.%, more preferably less than 20 wt.% and most preferably less than 10 wt.% of the dry matter that is contained in the barrier layer.

According to another advantageous embodiment, the barrier layer contains, calculated by weight of dry matter, 2-15 wt.%, more preferably 3-12 wt.% and most preferably 4-10 wt.% gluten.

The combination of gluten and starch preferably constitutes at least 30 wt.% of the dry matter of the barrier layer, more preferably at least 40 wt.% of the dry matter of the barrier layer and most preferably at least 50 wt.% of the dry matter of the barrier layer.

The barrier layer that is present in the ovenable crumb-coated snack preferably has a fat content, calculated by weight of dry matter, of 0-10 wt.%, more preferably of 0-5 wt.% and most preferably of 0-3 wt.%.

In order to improve adhesion characteristics and stability of the barrier layer it can be advantageous to include a thickening agent. Preferably, calculated by weight of dry matter, the barrier layer contains 0.03-1 wt.%, more preferably 0.05-0.6 wt.% of a thickening agent selected from guar gum, xanthan gum, cellulose derivative and combinations thereof.

The barrier layer that surround the filling of the ovenable snack may suitably contain, calculated by weight of dry matter, 0-22 wt.%, more preferably 2-20 wt.% and most preferably 5-18 wt.% of sugars selected from monosaccharides, disaccharides, trisaccharides and combinations thereof.

A combination of oligosaccharides and sugars may suitably be provided by a hydrolysed starch (e.g. glucose syrup). Preferably, the barrier layer contains, calculated by weight of dry matter, 0-22 wt.%, more preferably 2-20 wt.% and most preferably 5-18 wt.% of sugars selected from glucose, maltose, maltotriose and combinations thereof.

The crumb particles that are deposited onto the barrier layer preferably contain at least 50 wt.% starch. More preferably, the crumb particles have a starch content of 55-85 wt.%, most preferably of 65-80 wt.%.

The flour content of the crumb particles preferably exceeds 80% by weight of dry matter, more preferably the flour content exceeds 90% by weight of dry matter.

Gluten content of the crumb particles preferably is in the range of 5-20 wt.%, more preferably in the range of 5-12 wt.% and most preferably in the range of 7-11 wt.%.

Preferably, the starch in the crumb particles is essentially completely gelatinized as demonstrated by the absence of birefringence that is associated with the presence of starch granules. Starch granules show birefringence or a typical "maltese cross" when viewed in polarised light. The property of birefringence is brought about because the starch molecules are radially oriented within the granule. When starch is heated in water, birefringence is lost.

The crumb particles employed in accordance with the present invention preferably have been obtained by a process that comprises extruding a mixture comprising flour and water, wherein the mixture of flour and water is heated to a temperature in excess of 90°C, more preferably in excess of 105°C during extrusion. The crumb particles are preferably obtained by milling the extrudate so obtained.

According to a particularly preferred embodiment, the crumb particles of the present invention consist of milled extrusion-baked dough. These extruded crumb particles preferably contain 0.05-2 wt.%, more preferably 0.1-1 wt.% and most preferably 0.12-0.4 wt.% of biopolymer selected from natural gums, modified gums, gelatin, pectin, alginate, arabinogalactan, agar, carrageenan, furcellaran, xanthan and combinations thereof. Preferably, the biopolymer is selected from natural gums and combinations thereof. Examples of natural gums that may suitably be employed include guar gum, xanthan gum, locust bean gum, gum Arabic, tragacanth, gum karaya, gum ghatti, xanthan gum and combinations thereof. Most preferably, the biopolymer is selected from guar gum, locust bean gum, xanthan gum and combinations thereof.

The crumb particles preferably have a volume weighted average diameter of 0.5 to 3 mm, more preferably a volume weighted average diameter of 0.7 to 2.8 mm, and most preferably a volume weighted average diameter of 0.8 to 2.5 mm.

The inventors have found that it may be advantageous to prepare an ovenable snack according to the present invention by alternatingly applying two or more barrier and crumb layers. Accordingly, in a preferred embodiment, the layer of crumb particles that is deposited on the barrier layer that surrounds the filling is coated with a second barrier layer and a second layer of crumb particles is deposited onto the second barrier layer.

Preferably, both the first and the second barrier layer are barrier layers as described herein before. Preferably, the dry composition of the second barrier layer is identical to the dry composition of the first barrier layer that surrounds the filling.

Likewise, the crumb that is employed in the second layer of crumb particles preferably is a crumb as described herein before.

According to another preferred embodiment, the layer of crumb particles on the outside of the ovenable snack is coated with oil. The application of an oil coating offers the advantage that after oven heating the ready-to-eat snack closely resembles a deep fried snack. Preferably, the oil contains at least 80 wt.% triglycerides.

In accordance with a particularly preferred embodiment, the ovenable snack of the present invention is packaged in a packaging material that carries instructions to heat the food product in an oven, preferably at a temperature in the range of 160-220°C.

Another aspect of the present invention relates to a process of manufacturing an ovenable pre-baked crumb-coated snack, said process comprising:
(a) providing a portion of a filling composition having a water content of at least 30 wt.%;
(b) coating the portion of filling composition with a layer of coating composition to produce a coated portion, said coating composition having a water content of at least 45 wt.% and containing:
   - 15-75 wt.%, calculated by weight of dry matter, of oligosaccharides having a degree of polymerisation (DP) in the range of 4-20;
   - 2-45 wt.%, calculated by weight of dry matter, of protein;
   - 0-50 wt.%, calculated by weight of dry matter, of starch;
   wherein the combination of the oligosaccharides, protein and starch constitutes at least 50 wt.% of the dry matter of the coating composition;
(c) applying crumb particles onto the coated portion to produce a crumb-coated portion;
(d) pre-baking the crumb-coated portion to produce a pre-baked portion; and
(e) packaging the pre-baked portion.

Preferably, step (d) of the aforementioned manufacturing process yields an ovenable pre-baked crumb-coated snack as described herein before.

The filling composition that is employed in the process preferably is a filling as described herein before. Likewise, also the crumb particles employed preferably are crumb particles as described herein before.

The dry composition of the coating composition employed in the process preferably is identical to that of the barrier coating layer as described herein before. The ingredients of the coating composition that is applied in the present process are also preferably as described herein before.

The coating composition preferably has a water content of 48-88 wt.%, more preferably a water content of 50-87 wt.% and most preferably a water content of 52-86 wt.%.

Before coating the portion of filling composition with uncooked coating composition, the portion may suitably be coated with predust. The application of predust facilitates the adhesion of the coating composition onto the surface of meat, fish, poultry and vegetables.

According to a particularly preferred embodiment, the crumb particles employed in the present process have a water content of less than 8 wt.%, more preferably of less than 7 wt.% and most preferably of less than 6 wt.%. Typically, the crumb particles have a water content of at least 1 wt.%.

The crumb particles employed in the present process preferably have a glass transition temperature of more than 60°C, more preferably of more than 80°C, even more preferably of more than 100°C and most preferably of more than 110°C.

The glass transition temperature of the crumb particles can be determined by modulated DSC using the following procedure:
- A ground sample of 20-30 mg is added to a stainless steel DSC pan. The DSC pan is inserted in the DSC equipment.
- The sample is equilibrated at 20°C, and then heated at a rate of 2°C/min to a maximum temperature of 160°C.
- The sample is cooled back to 20°C, and then heated again at a rate of 2°C/min to a maximum temperature of 160°C.
- The heat flow is measured during the heating cycle, glass transition is determined in the second heating cycle.

In the present manufacturing process preferably 100 parts by weight of filling composition are combined with 3 to 60 parts by weight of coating composition, and 3 to 60 parts by weight of crumb particles. More preferably, about 100 parts by weight of filling composition are combined with 5 to 45 parts by weight of coating composition, and 5 to 50 parts by weight of crumb particles.

According to a particularly preferred embodiment, the crumb-coated portion is pre-baked prior to packaging. Typically, the crumb-coated portion is pre-baked in an oven at an oven temperature in the range of 130-280- °C for 1-30 minutes, more preferably at an oven temperature in the range of 140-260- °C for 2-20 minutes.

The core temperature of the crumb-coated portion preferably reaches a temperature of at least 50 °C, more preferably of at least 55 °C and most preferably of at least 58 °C during pre-baking.

According to another preferred embodiment, the crumb-coated portion is coated with oil prior to pre-baking and/or the pre-baked portion is coated with oil prior to packaging. Preferably, the oil used for coating the portions contains at least 80 wt.% triglycerides. The oil preferably has a melting point of less than 30°C. The amount of oil that is applied preferably is in the range of 10 to 50% by weight of the crumb particles, more preferably in the range of 15 to 35% by weight of the crumb particles.

According to a particularly preferred embodiment, the process comprises freezing the pre-baked portion to a core temperature of less than -12 °C before it is packaged.

In order to minimize unwanted water migration, the pre-baked portion is introduced into a freezer within 5 minutes, preferably within 2 minutes after the pre-baking step has ended.

The pre-baked portion is preferably packaged after freezing.

Yet another aspect of the invention relates to a method of preparing a ready-to-eat snack, said method comprising heating the ovenable snack of the present invention in an oven to a core temperature of at least 60°C.

The invention is further illustrated by the following non-limiting examples.

### EXAMPLES

### Example 1

Ovenable pre-baked crumb-coated snacks, known in the Netherlands as "bitterballen", were prepared as described below.

A ragout filling was prepared on the basis of the recipe that is shown in Table 1. The composition was cooked for 30 minutes at 95 °C and cooled over night at 4 °C.

**Table 1**

| | **Wt. %** |
|---|---|
| Precooked beef | 15 |
| Wheat flour | 6 |
| Corn starch | 6 |
| Palm stearin | 5 |
| Gelatin beef 200BL/30 | 2.02 |
| Bouillon, beef powder, yeast extract | 1.06 |
| Methocel K99 | 1 |
| Herbs and spices | 0.99 |
| Methocel MX | 0.5 |
| Salt | 0.49 |
| Sugar | 0.44 |
| Water | 61.5 |

Coating compositions were prepared by combining glucose syrup, soy flour and water. The weight ratios in which glucose syrup and soy flour were applied in the different coating compositions are shown in Table 2. Also shown is the amount of water that was used to prepare the initial mix from 100 grams of dry ingredient(s).

**Table 2**

| | **Parts by weight** | | | | | | | |
|---|---|---|---|---|---|---|---|---|
| | **A** | **B** | **C** | **D** | **E** | **F** | **G** | **H** |
| Glucose syrup (DE 20) ¹ | 0 | 15 | 25 | 40 | 50 | 60 | 75 | 100 |
| Soy flour ² | 100 | 85 | 75 | 60 | 50 | 40 | 25 | 0 |
| | | | | | | | | |
| Water (mL) | 514 | 442 | 386 | 303 | 246 | 197 | 134 | 100 |

| | | | | | | | | |
|---|---|---|---|---|---|---|---|---|
| 1 Spray dried glucose syrup made from wheat starch; 95 wt.% carbohydrates (3.0% glucose, 7.5% maltose, 9.5% maltotriose, 80% higher sugars), 5 wt.% moisture 2 Slightly toasted, defatted soy flour (50.0% protein [N*6,25 on dry matter], 32.0% carbohydrates of which 14.0% sugars, 1.0% fat, 6.5% ash, 9.0% moisture) | | | | | | | | |

The coating compositions were prepared by mixing 100 grams of dry ingredients with 100 to 514 ml water for 5 minutes at full speed using a K-beater. Next viscosity was measured using a Brookfield viscometer (spindle 62, 10 rpm) and water was added to reduce viscosity to less than 1000 mPa.s.

The ragout filling was extruded and shaped by a Rheon into balls of 17 grams. These were kept frozen until usage. At usage the ragout balls were fully thawed by keeping them over night at 4 °C.

A predust (appr. 2.4% pick-up by filling portions) was applied. The composition of the predust is shown in Table 3.

**Table 3**

| **Ingredients** | **Wt. %** |
|---|---|
| Crumbs (predust fraction of extrusion-baked crumb) | 59.0 |
| Oxidized wheat starch | 40.0 |
| Rapeseed oil | 1.0 |

The predusted filling portions were coated with the coating composition (appr. 10 % pick-up).

The coated portions were breaded with fine crumb (0.8-1.5mm, appr. 7 % pick-up). Thereafter these breaded portions were coated again with the coating composition (1.5-2.5 mm, appr. 16% pick-up). These coated portions were breaded with coarse crumb (appr. 8.% pick-up).

The crumb-coated portions were sprayed with oil (appr. 4% pick-up).

The crumb-coated portions so obtained were baked for 6 minutes in a preheated oven at 200°C and 30% RH.

After the oven, the pre-baked snacks were placed into a shock freezer and kept at -34°C for 30 minutes. Next, the frozen snacks were packaged in bags and stored in a freezer at -25°C.

After 2 days of frozen storage, the frozen snacks were prepared for consumption by baking them for approximately 14 minutes in an oven that had been preheated to 180°C. The snacks were taken from the oven as soon as a core temperature of 72°C had been reached.

Pictures were taken of the snacks immediately after they had been removed from the oven. These pictures were used to score the amount of cracks that had been formed during bake-off.

Two minutes after removal from the oven, the snacks were evaluated by an expert panel. The panel scored the quality of the snacks, paying special attention to the appearance and the quality of the outer coating (crispiness etc.).

Both the amount of cracks and the organoleptic quality of the snacks were rated on a scale of 0 to 5:
0 = unacceptable
1 = bad
2 = poor
3 = good
4 = very good
5 = perfect

The results of the evaluations are summarised in Table 4.

**Table 4**

| | **A** | **B** | **C** | **D** | **E** | **F** | **G** | **H** |
|---|---|---|---|---|---|---|---|---|
| Cracks score (0-5) | 0 | 1 | 4 | 4 | 4 | 5 | 3 | 4 |
| Organoleptic score (0-5) | 5 | 5 | 4 | 4 | 5 | 3 | 3 | 3 |

### Example 2

Example 1 was repeated, except that this time coating compositions were prepared using soy flour, water and different carbohydrates. The carbohydrates and soy flour were applied in a weight ratio of 1:1. The results of the evaluations are shown in Table 5.

**Table 5**

| | Cracks score (0-5) | Organoleptic score (0-5) |
|---|---|---|
| Sucrose | 1 | 3 |
| Glucose syrup (DE 20) ¹ | 4 | 5 |
| Maltodextrin (DE 6) | 3 | 3 |
| Dextrin (DE 2) | 0 | 1 |
| Starch/glucose mixture (76:24) | 0 | 1 |
| Inulin | 0 | 2 |

| | | |
|---|---|---|
| ¹ Spray dried glucose syrup made from wheat starch; 95 wt.% carbohydrates (3.0% glucose, 7.5% maltose, 9.5% maltotriose, 80% higher sugars), 5 wt.% moisture | | |

### Example 3

Example 1 was repeated, except that this time coating compositions were prepared on the basis of the dry compositions shown in Table 6.

**Table 6**

| | **Parts by weight** | | |
|---|---|---|---|
| | **A** | **B** | **C** |
| Glucose syrup | 50 | 50 | 50 |
| Wheat flour (11% protein) | 50 | | 28 |
| Rice flour (8% protein) | | 50 | |
| Wheat gluten (75% protein)² | | | 22 |
| Water | 117 | 110 | 144 |

| | | | |
|---|---|---|---|
| ¹ Spray dried glucose syrup made from wheat starch; 95 wt.% carbohydrates (3.0% glucose, 7.5% maltose, 9.5% maltotriose, 80% higher sugars), 5 wt.% moisture ² Wheat gluten, 75 wt.% protein, 7 wt.% carbohydrates (4% sugars, 3% starch), 6 wt.% fat, 1.5 wt.% fibers, 1.5 wt. % others, 9 wt.% moisture | | | |

The results of the evaluations are summarised in Table 7.

**Table 7**

| | **A** | **B** | **C** |
|---|---|---|---|
| Cracks score (0-5) | 4 | 4 | 5 |
| Organoleptic score (0-5) | 4 | 3 | 5 |

### Example 4

Example 1 was repeated, except that this time a single coating composition was prepared on the basis of the dry compositions shown in Table 8.

**Table 8**

| | **Parts by weight** |
|---|---|
| Soy flour defatted | 29.35 |
| Soy flour full fat | 3.5 |
| Dextrose | 4 |
| Crumbs <0.8 mm | 10 |
| Pea protein | 3 |
| Xanthan gum | 0.15 |
| Dry glucose syrup | 50 |
| Water | 265 |

The snacks prepared using this coating composition received the maximum scores for the absence of cracks and organoleptic quality.

### Example 5

Example 1 was repeated, except that this time an aqueous coating composition as disclosed in Example 8 of US 2016/0164930 was used as a coating composition (Coating Composition A) and compared to a coating composition according to the present invention (Coating Composition 1).

The recipes of these coating compositions are shown in Tables 9a and 9b.

**Table 9a**

| **Coating composition A** | **Wt. %** |
|---|---|
| Modified starch (THERMFLO ) | 0.35 |
| Thickener (METHOCEL A4M) | 0.25 |
| Xanthan gum | 0.25 |
| Egg albumen | 0.15 |
| Water | 99 |

**Table 9b**

| **Coating composition 1** | **Wt.%** |
|---|---|
| Soy flour | 10.26 |
| Dextrose | 1.00 |
| Crumbs <0.8 mm | 1.30 |
| Rapeseed oil | 0.40 |
| Xanthan gum | 0.04 |
| Dry glucose syrup (DE 20-23) ¹ | 12.60 |
| Water | 74.40 |

| | |
|---|---|
| ¹ Spray dried glucose syrup made from wheat starch; 95 wt.% carbohydrates (3.0% glucose, 7.5% maltose, 9.5% maltotriose, 80% higher sugars), 5 wt.% | |

Frozen pre-baked snacks were prepared as in Example 1 (Snack A using Coating Composition A, Snack 1 using Coating Composition 1).

After 3 days of frozen storage, the frozen pre-baked snacks were prepared for consumption by baking them for approximately 17 minutes in an oven that had been preheated to 220°C. The snacks were taken from the oven as soon as a core temperature of 72°C had been reached.

Pictures were taken of the snacks immediately after they had been removed from the oven. These pictures were used to score the amount of cracks that had been formed during bake-off.

Two minutes after removal from the oven, the snacks were evaluated by an expert panel. The panel scored the quality of the snacks, paying special attention to the appearance and the quality of the outer coating (crispiness etc.). The percentage cracks was determined for a set of 10 baked snacks. Appearance, hardness and crispiness were scored on a scale of 0-5 (0=unacceptable and 5=perfect).

The results of the evaluations are summarised in Table 10.

**Table 10**

| | **% cracks** | **Appearance (0-5)** | **Hardness (0-5)** | **Crispiness (0-5)** |
|---|---|---|---|---|
| **Snack A** | 100 | 1.0 | 1.0 | 2.0 |
| **Snack 1** | 0 | 5.0 | 4.5 | 4.5 |

## Claims

1. An ovenable pre-baked crumb-coated snack comprising:
(a) a filling having a water content of 30-90 wt.%;
(b) a barrier layer surrounding the filling, said barrier layer containing:
• 15-75 wt.%, calculated by weight of dry matter, of oligosaccharides having a degree of polymerisation (DP) in the range of 4-20;
• 2-45 wt.%, calculated by weight of dry matter, of protein;
• 0-50 wt.%, calculated by weight of dry matter, of starch;
wherein the combination of the oligosaccharides, protein and starch constitutes at least 50 wt.% of the dry matter of the barrier layer;
(c) a layer of crumb particles deposited onto the surrounding barrier layer.

2. Ovenable snack according to claim 1, wherein the protein in the barrier layer is selected from soy protein, egg protein, whey protein, legume protein, gluten and combinations thereof.

3. Ovenable snack according to claim 2, wherein the barrier layer contains, calculated by weight of dry matter, 10-45 wt.% of heat setting protein selected from soy protein, egg protein, legume protein and combinations thereof.

4. Ovenable snack according to claim 2 or 3, wherein the combination of the heat setting protein and the oligosaccharides constitutes at least 35 wt.% of dry matter of the barrier layer.

5. Ovenable snack according to any one of claims 2-4, wherein the barrier layer contains, calculated by weight of dry matter, at least 10 wt.% of soy protein.

6. Ovenable snack according to any one of the preceding claims, wherein the oligosaccharides are gluco-oligosaccharides.

7. Ovenable snack according to any one of the preceding claims, wherein the barrier layer contains, calculated by weight of dry matter, at least 20 wt.% of gluco-oligosaccharides having a DP in the range of 4-20.

8. Ovenable snack according to any one of the preceding claims, wherein the barrier layer contains, calculated by weight of dry matter, at least 50 wt.% of the combination of soy protein and gluco-oligosaccharides having a DP in the range of 4-20.

9. Ovenable snack according to any one of the preceding claims, comprising 40-95 wt.% of filling.

10. Ovenable snack according to any one of the preceding claims, wherein the outer layer of crumb particles is coated with oil.

11. A process of manufacturing an ovenable pre-baked crumb-coated snack, said process comprising:
a) providing a portion of a filling composition having a water content of at least 30 wt.%;
b) coating the portion of filling composition with a coating composition to produce a coated portion, said coating composition having a water content of at least 45 wt.% and containing:
- 15-75 wt.%, calculated by weight of dry matter, of oligosaccharides having a degree of polymerisation (DP) in the range of 4-20;
- 2-45 wt.%, calculated by weight of dry matter, of protein;
- 0-50 wt.%, calculated by weight of dry matter, of starch;
wherein the combination of the oligosaccharides, protein and starch constitutes at least 50 wt.% of the dry matter of the coating composition;
c) applying crumb particles onto the coated portion to produce a crumb-coated portion;
d) pre-baking the crumb-coated portion to produce a pre-baked portion; and
e) packaging the pre-baked portion.

12. Process according to claim 11, wherein the process comprises freezing the pre-baked portion to a core temperature of less than -12 °C before it is packaged.

13. Process according to claim 11 or 12, wherein 100 parts by weight of filling composition are combined with 3 to 60 parts by weight of coating composition, and 3 to 60 by weight of crumb particles.

14. Process according to any one of claims 11-13, wherein the pre-baked crumb coated portion obtained in step d) is an ovenable snack according to any one of claims 1-10.

15. A method of preparing a ready-to-eat snack, said method comprising heating the ovenable snack according to one or more of claims 1-10 in an oven to a core temperature of at least 60°C.

## Patentansprüche

1. Ofentauglicher, vorgebackener, mit Krümel überzogener Snack, der Folgendes umfasst:
(a) eine Füllung mit einem Wassergehalt von 30-90 Gew.-%;
(b) eine Barriereschicht, die die Füllung umgibt, wobei die besagte Barriereschicht Folgendes enthält:
• 15-75 Gew.-%, berechnet nach dem Gewicht der Trockensubstanz, Oligosaccharide mit einem Polymerisationsgrad (DP) im Bereich von 4-20;
• 2-45 Gew.-%, berechnet nach dem Gewicht der Trockensubstanz, Protein;
• 0-50 Gew.-%, berechnet nach dem Gewicht der Trockensubstanz, Stärke;
wobei die Kombination aus Oligosacchariden, Protein und Stärke mindestens 50 Gew.-% der Trockensubstanz der Barriereschicht ausmacht;
(c) eine Schicht aus Krümelpartikeln, die auf der umliegenden Barriereschicht abgelagert sind.

2. Ofentauglicher Snack nach Anspruch 1, wobei das Protein in der Barriereschicht aus Sojaprotein, Eiprotein, Molkenprotein, Hülsenfruchtprotein, Gluten und Kombinationen davon ausgewählt ist.

3. Ofentauglicher Snack nach Anspruch 2, wobei die Barriereschicht, berechnet nach dem Gewicht der Trockensubstanz, 10-45 Gew.-% hitzekoagulierendes Protein enthält, das aus Sojaprotein, Eiprotein, Hülsenfruchtprotein und Kombinationen davon ausgewählt ist.

4. Ofentauglicher Snack nach Anspruch 2 oder 3, wobei die Kombination aus dem hitzekoagulierenden Protein und den Oligosacchariden mindestens 35 Gew.-% Trockensubstanz der Barriereschicht ausmacht.

5. Ofentauglicher Snack nach einem der Ansprüche 2-4, wobei die Barriereschicht, berechnet nach dem Gewicht der Trockensubstanz, mindestens 10 Gew.-% Sojaprotein enthält.

6. Ofentauglicher Snack nach einem der vorhergehenden Ansprüche, wobei die Oligosaccharide Gluco-Oligosaccharide sind.

7. Ofentauglicher Snack nach einem der vorhergehenden Ansprüche, wobei die Barriereschicht, berechnet nach dem Gewicht der Trockensubstanz, mindestens 20 Gew.-% Gluco-Oligosaccharide mit einem DP im Bereich von 4-20 enthält.

8. Ofentauglicher Snack nach einem der vorhergehenden Ansprüche, wobei die Barriereschicht, berechnet nach dem Gewicht der Trockensubstanz, mindestens 50 Gew.-% der Kombination aus Sojaprotein und Gluco-Oligosacchariden mit einem DP im Bereich von 4-20 enthält.

9. Ofentauglicher Snack nach einem der vorhergehenden Ansprüche, der 40-95 Gew.-% Füllung umfasst.

10. Ofentauglicher Snack nach einem der vorhergehenden Ansprüche, wobei die äußere Schicht aus Krümelpartikeln mit Öl überzogen ist.

11. Verfahren zum Herstellen eines ofentauglichen, vorgebackenen, mit Krümel überzogenen Snacks, wobei das besagte Verfahren Folgendes umfasst:
a) Bereitstellen einer Portion einer Füllungszusammensetzung mit einem Wassergehalt von mindestens 30 Gew.-%;
b) Überziehen der Portion der Füllungszusammensetzung mit einer Überzugszusammensetzung, um eine überzogene Portion herzustellen, wobei die besagte Überzugszusammensetzung einen Wassergehalt von mindestens 45 Gew.-% aufweist und Folgendes enthält:
- 15-75 Gew.-%, berechnet nach dem Gewicht der Trockensubstanz, Oligosaccharide mit einem Polymerisierungsgrad (DP) im Bereich von 4-20;
- 2-45 Gew.-%, berechnet nach dem Gewicht der Trockensubstanz, Protein;
- 0-50 Gew.-%, berechnet nach dem Gewicht der Trockensubstanz, Stärke;
wobei die Kombination aus Oligosacchariden, Protein und Stärke mindestens 50 Gew.-% der Trockensubstanz der Überzugszusammensetzung ausmacht;
c) Auftragen von Krümelpartikeln auf der überzogenen Portion, um eine mit Krümel überzogener Portion herzustellen;
d) Vorbacken der mit Krümel überzogenen Portion, um eine vorgebackene Portion herzustellen; und
e) Verpacken der vorgebackene Portion.

12. Verfahren nach Anspruch 11, wobei das Verfahren das Einfrieren der vorgebackene Portion auf eine Kerntemperatur von weniger als -12 °C umfasst, bevor er verpackt wird.

13. Verfahren nach Anspruch 11 oder 12, wobei 100 Gewichtsteile der Füllungszusammensetzung mit 3 bis 60 Gewichtsteilen der Überzugszusammensetzung und 3 bis 60 Gewichtsteilen der Krümelpartikel kombiniert werden.

14. Verfahren nach einem der Ansprüche 11-13, wobei die vorgebackene, mit Krümel überzogene Portion, die in Schritt d) erhalten wurde, ein ofentauglicher Snack nach einem der Ansprüche 1-10 ist.

15. Verfahren zum Zubereiten eines verzehrfertigen Snacks, wobei das Verfahren das Erhitzen des ofentauglichen Snacks nach einem oder mehreren der Ansprüche 1-10 in einem Ofen auf eine Kerntemperatur von mindestens 60 °C umfasst.

## Revendications

1. Collation à panure précuite pouvant être cuite au four comprenant :
(a) une garniture ayant une teneur en eau de 30 à 90 % en poids ;
(b) une couche barrière entourant la garniture, ladite couche barrière contenant :
• 15 à 75 % en poids, calculé en poids de matière sèche, d'oligosaccharides ayant un degré de polymérisation (DP) compris entre 4 et 20 ;
• 2 à 45 % en poids, calculé en poids de matière sèche, de protéine ;
• 0 à 50 % en poids, calculé en poids de matière sèche, d'amidon ;
où la combinaison des oligosaccharides, de la protéine et de l'amidon constitue au moins 50 % en poids de la matière sèche de la couche barrière ;
(c) une couche de particules de panure déposée sur la couche barrière entourante.

2. Collation pouvant être cuite au four selon la revendication 1, où la protéine dans la couche barrière est choisie parmi la protéine de soja, la protéine d'oeuf, la protéine de lactosérum, la protéine de légumineuses, le gluten et leurs combinaisons.

3. Collation pouvant être cuite au four selon la revendication 2, où la couche barrière contient, calculé en poids de matière sèche, 10 à 45 % en poids de protéine à stabilisation thermique choisie parmi la protéine de soja, la protéine d'oeuf, la protéine de légumineuses et leurs combinaisons.

4. Collation pouvant être cuite au four selon la revendication 2 ou 3, où la combinaison de la protéine à stabilisation thermique et des oligosaccharides constitue au moins 35 % en poids de la matière sèche de la couche barrière.

5. Collation pouvant être cuite au four selon l'une quelconque des revendications 2 à 4, où la couche barrière contient, calculé en poids de matière sèche, au moins 10 % en poids de protéine de soja.

6. Collation pouvant être cuite au four selon l'une quelconque des revendications précédentes, où les oligosaccharides sont des gluco-oligosaccharides.

7. Collation pouvant être cuite au four selon l'une quelconque des revendications précédentes, où la couche barrière contient, calculé en poids de matière sèche, au moins 20 % en poids de gluco-oligosaccharides ayant un DP dans la plage de 4 à 20.

8. Collation pouvant être cuite au four selon l'une quelconque des revendications précédentes, où la couche barrière contient, calculé en poids de matière sèche, au moins 50 % en poids de la combinaison de protéine de soja et de gluco-oligosaccharides ayant un DP dans la plage de 4 à 20.

9. Collation pouvant être cuite au four selon l'une quelconque des revendications précédentes, comprenant 40 à 95 % en poids de garniture.

10. Collation pouvant être cuite au four selon l'une quelconque des revendications précédentes, où la couche externe de particules de panure est enrobée d'huile.

11. Procédé de fabrication d'une collation à panure précuite pouvant être cuite au four, ledit procédé comprenant :
a) fournir une portion d'une composition de garniture ayant une teneur en eau d'au moins 30 % en poids ;
b) enrober la portion de composition de garniture avec une composition d'enrobage pour produire une portion enrobée, ladite composition d'enrobage ayant une teneur en eau d'au moins 45 % en poids et contenant :
- 15 à 75 % en poids, calculé en poids de matière sèche, d'oligosaccharides ayant un degré de polymérisation (DP) dans la plage de 4 à 20 ;
- 2 à 45 % en poids, calculé en poids de matière sèche, de protéine ;
- 0 à 50 % en poids, calculé en poids de matière sèche, d'amidon ;
où la combinaison des oligosaccharides, de la protéine et de l'amidon constitue au moins 50 % en poids de la matière sèche de la composition d'enrobage ;
c) appliquer des particules de panure sur la portion enrobée pour produire une portion enrobée de panure ;
d) précuire la portion enrobée de panure pour produire une portion précuite ; et
e) emballer la portion précuite.

12. Procédé selon la revendication 11, où le procédé comprend la congélation de la portion précuite à une température à coeur inférieure à -12 °C avant son emballage.

13. Procédé selon la revendication 11 ou 12, où 100 parties en poids de composition de garniture sont combinées avec 3 à 60 parties en poids de composition d'enrobage, et 3 à 60 parties en poids de particules de panure.

14. Procédé selon l'une quelconque des revendications 11 à 13, où la portion enrobée de panure précuite obtenue à l'étape d) est une collation pouvant être cuite au four selon l'une quelconque des revendications 1 à 10.

15. Procédé de préparation d'une collation prête à consommer, ledit procédé comprenant le chauffage de la collation pouvant être cuite au four selon une ou plusieurs des revendications 1 à 10 dans un four à une température à coeur d'au moins 60 °C.
